# EUROPEAN PATENT SPECIFICATION

(11) **EP 3 863 556 B1**
(45) Date of publication and mention of the grant of the patent: **19.07.2023**
(21) Application number: 19786675.9
(22) Date of filing: 08.10.2019
(51) Int. Cl.: A61C 8/00

(54) **DENTAL IMPLANT SYSTEM**
ZAHNIMPLANTATSYSTEM
SYSTÈME D'IMPLANT DENTAIRE

(30) Priority: 09.10.2018 IT 201800009288
(43) Date of publication of application: 18.08.2021
(73) Proprietor: Calabria, Ennio, 88046 Lamezia Terme (CZ) (IT)
(72) Inventor: Calabria, Ennio, 88046 Lamezia Terme (CZ) (IT)
(74) Representative: Cipriani, Guido
(86) International application number: PCT/IB2019/058563
(87) International publication number: WO 2020/075071

(56) References cited:
- WO-A1-2017/179517
- GB-A- 2 487 553
- US-A1- 2002 127 517

## Description

### Technical Field

The present invention relates to a dental implant system, comprising a dental implant having a frustoconical cavity, an abutment having an abutment post to be definitively retained in the frustoconical implant cavity and an abutment head for supporting a dental crown, a transfer abutment having a transfer post intended to be inserted into the frustoconical implant cavity before impression taking, and a transfer head identical to the abutment head, and an implant analog. For convenience in the following the transfer abutment will be called simply transfer. The transfer is an abutment that is inserted into a dental implant for impression taking made with a suitable deformable material without the use of a definitive abutment. In fact, by using the latter, there is the risk that the impression is not easily removable from the patient's mouth due to the shape adherence of the definitive abutment.

The invention relates in particular to a dental implant that has a through seat for the abutment pin.

### Background Art

US 6,290,500 describes a system and a dental implant method in which a transfer is present. The transfer has a substantially cylindrical pin portion with a longitudinal axis provided with a longitudinally extending slot so that the pin portion can be removably received in the hole of an implant having a retention taper. In fact, the slot allows the pin portion to adhere elastically to the walls of the implant hole only for impression taking.

It has been noted that a portion of such a pin does not maintain the abutment in a stable condition, and this can lead to an imprecise impression taking. Furthermore, the mentioned transfer does not have a means of identifying its circumferential position inside the plant.

WO 2017/137588 relates to an abutment suitable to be attached to a dental implant. The abutment has a main body comprising a tapered portion, and a prism shaped attachment portion for attaching the abutment to the dental implant. The abutment attachment portion comprises a plurality of projections for frictional coupling with a corresponding inner portion of the dental implant, and the abutment tapered portion mates with a facing tapered portion of the dental implant. The contact between the abutment attachment portion and the inner portion of the dental implant mainly occurs by the projections that are elastically and plastically deformable.

The document WO 2017/137588 deals with the problem of obtaining the easy removal of an abutment from an implant that is particularly critical in impression taking.

GB2487553A discloses a prosthetic component for mounting to a dental implant platform. The prosthetic component comprises a shaft configured to interface with a socket of the dental implant platform. The prosthetic component also comprises a resilient member partially located in a recess on the shaft when in an uncompressed state. The resilient member acts to create a frictional force between the shaft and implant platform.

US2002127517A1 discloses a post of an implant having a locking taper in a bore of an implant having a generally matching locking taper as a reference to determine the position of a stop surface on impression posts, abutment analog posts and the like received in the bore of an implant and implant analog.

WO 2017/179517 A1 discloses a fixture main body having a center hole which is opened in the front end face and the root end face of the fixture main body. The center hole is a through hole, penetrating the fixture main body along the length of the fixture main body.

The present invention aims, on the one hand, to provide a dental implant system that allows a simple and easy execution of the operations that the dentist must perform before the definitive abutment is installed, in particular in relation to the transfer.

On the other hand, the invention intends to provide a dental implant that has features of reduced dimensions, especially in length, and shape features that can allow it to be easily integrated into a dental arch.

### Summary of the invention

The invention is as defined in the appended claims.

An object of the present invention is to provide a dental implant system in which a transfer on one hand is received stably in the implant hole for a precise impression taking, and on the other hand allows an easy and comfortable removal of the impression after hardening of the deformable material with which it is taken.

Another object of the present invention is to provide a dental implant that has a through seat for the abutment, in other words a dental implant that has an internal cavity open from the apical end to the inlet end for the abutment. Therefore, the invention provides a dental implant system, as defined in the main claim and in dependent claims.

Advantageously, the dental implant in which the transfer according to the present invention is used, is of a screw type, but could also be different, such as for example a plateau type. Its frustoconical cavity is a longitudinal through hole for the insertion of the abutment complete with dental crown. The dental implant can have apically, i.e. on the side opposite to the insertion side of the abutment, a prismatic end space, for example hexagonal, communicating with the outside. This allows a stable, not rotatable positioning of both the transfer and the abutment in the implant. Alternatively, the prismatic end space can be round, i.e. a longitudinal continuation of the dental implant.

Moreover, since the frustoconical cavity is a through hole, the dimensions of the implant are reduced.

The frustoconical cavity could have a very small conicity, for example less than 4°, which is normally called conometric. The feature for which the frustoconical cavity is a through hole is particularly advantageous because the abutment can exploit the entire length of the dental implant for its installation. Moreover, the fact that the apical end of the dental implant is hollow allows the insertion of the bone formation inside it for a better integration and stabilization of the dental implant in the dental arch.

### Brief Description of Drawings

Further features and advantages of the present invention will become most evident from the description of embodiments of a dental implant system, illustrated by way of an example in the accompanying drawings in which:
- Figure 1 is a central longitudinal section of a dental implant according to the present invention;
- Figure 2 is a schematic side view of a transfer according to the present invention;
- Figure 3 is a side view of the transfer of Figure 2 inserted in a model implant analog, represented in cross-section, that was obtained from an impression, on the transfer being a tooth crown represented with a dashed line;
- Figure 4 is a schematic side view of an abutment to be inserted stably in the implant in Figure 1;
- Figure 5 is a partially cross-sectioned side view of the abutment in Figure 4 complete with a dental crown shown with a dashed line and inserted in the implant in Figure 1;
- Figure 6 is a central longitudinal section of a first variant of the dental implant according to the present invention;
- Figure 7 is a schematic side view of a first transfer variant according to the present invention;
- Figure 8 is a central longitudinal section of a second variant of the dental implant according to the present invention;
- Figure 9 is a central longitudinal section of a third variant of the dental implant according to the present invention;
- Figure 10 is a side view of a fourth variant of the dental implant according to the present invention and of a cap shown exploded with respect to the implant;
- Figure 11 is an assembled central longitudinal cross-section of the fourth variant of the dental implant with the cap; and
- Figure 12 is a central longitudinal section of a fifth variant of the dental implant according to the present invention.

### Description of Embodiments of the Invention

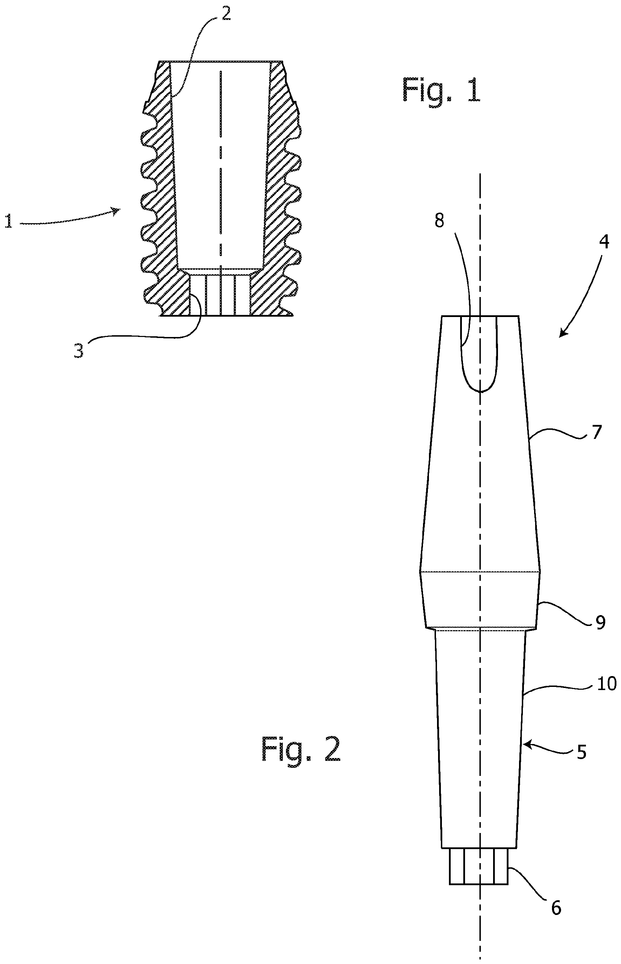

Reference is initially made to Figure 1 which is a central longitudinal section of a dental implant according to the present invention. The dental implant, which is indicated generally as 1, is represented as of the screw type, but in the following it is shown that it could also be different, such as of a plateau type. Designated as 2 is a frustoconical cavity which is a longitudinal through hole for the insertion of an abutment complete with a dental crown. The dental implant 1 has, on a side opposite to the insertion side of the abutment, that is to say in its base or apical end, a non-round end space 3, for example of hexagonal prismatic shape. Thanks to the fact that the frustoconical cavity 2 is a longitudinal through hole, the dimensions of the implant 1 are reduced, even by 0.3-2 mm, compared to a conventional implant without a through cavity.

Figure 2 is a schematic side view of a transfer according to the present invention. Traditionally, the transfer, indicated generally as 4, has a transfer post 5 terminating inferiorly with a non-round end conforming to that of the end space 3, for example a hexagonal prismatic end 6, such as to be inserted in the end hexagonal prismatic space 3 of the dental implant 1. Furthermore, the transfer 4 has a transfer head 7 intended to support a dental crown. The transfer head 7 is shown as having a frustoconical shape tapered on the side opposite to the transfer post 5. As is known, the transfer head 7 has a lightening 8 or the like to indicate the orientation of the transfer 4. According to the present invention, the transfer post 5 has a first frustoconical superficial retaining portion 9, bordering at the top with the transfer head 7, and a second frustoconical surface portion 10 with a taper lower than that of the first frustoconical surface portion 9. Preferably, the extent of the first frustoconical surface retaining portion 9 is a quarter of the extent of the second frustoconical surface portion 10. Such a configuration of the transfer 4, that is double-conical, is useful for impression taking on the implant 1 in Figure 1. In fact, the first frustoconical retaining portion 9 has the same conicity as the frustoconical cavity 2 of the implant 1. When the transfer 4 is inserted with the transfer post 5 in the frustoconical cavity 2 of the implant 1, the first frustoconical surface retaining portion 9 remains adherent due to friction in the right extent with the surface of the frustoconical cavity 2, while its hexagonal prismatic end 6 is locked to the rotation in the end hexagonal prismatic space 3 of the dental implant 1. The right measure of adherence indicated above allows the removal of the impression without the risk that the transfer 4 remains attached to the implant 1 instead of being integral with the deformable material used for impression taking.

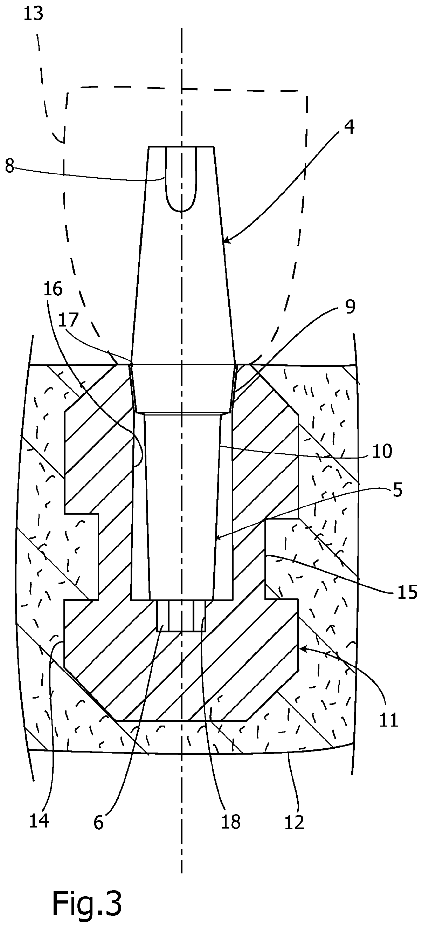

As is known, the plaster cast is obtained on the impression, as shown schematically in Figure 3 that comprises in a side view the transfer 4 in Figure 1. The transfer 4 is inserted in an implant analog 11 embedded in the plaster cast 12 obtained on the impression. The plaster cast 12 is shown in partial cross-section, while a dental crown 13 represented with a dashed line is made on the transfer 4. The dental crown 13 is made by the dental technician with known techniques and materials. The implant analog 11 has an outer surface 14 provided with undercuts 15 for retaining it inside the plaster cast 12 and an internal cavity 16 for receiving the transfer post 5. An upper portion 17 of the internal cavity 16 has a frustoconical shape with the same conicity as the frustoconical cavity 2 of the implant 1 to adhere to the first frustoconicalshaped retaining portion 9 of the transfer 4, while the rest of the internal cavity 16 is not in contact with the transfer post 5. Furthermore, the internal cavity 16 has a bottom 18, to receive the hexagonal prismatic end 6 of the transfer 4.

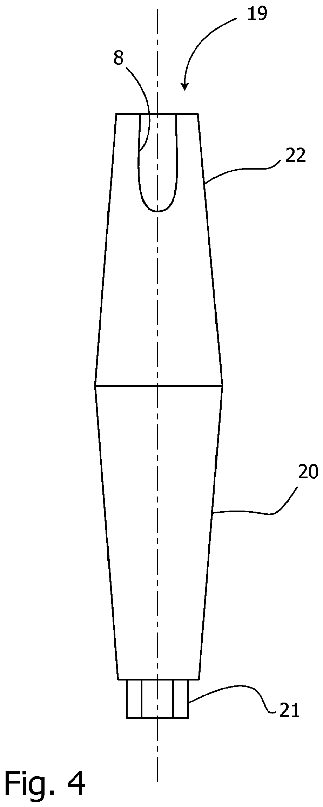

Once manufactured, the dental crown 13 can be placed on the abutment 19 shown in the schematic side view in Figure 4.

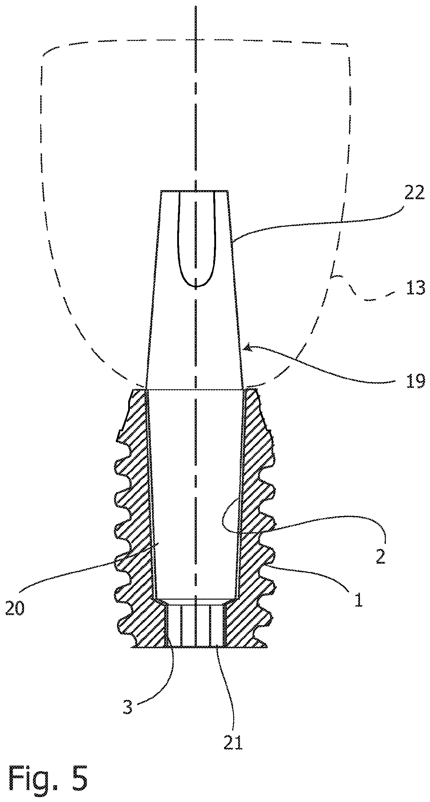

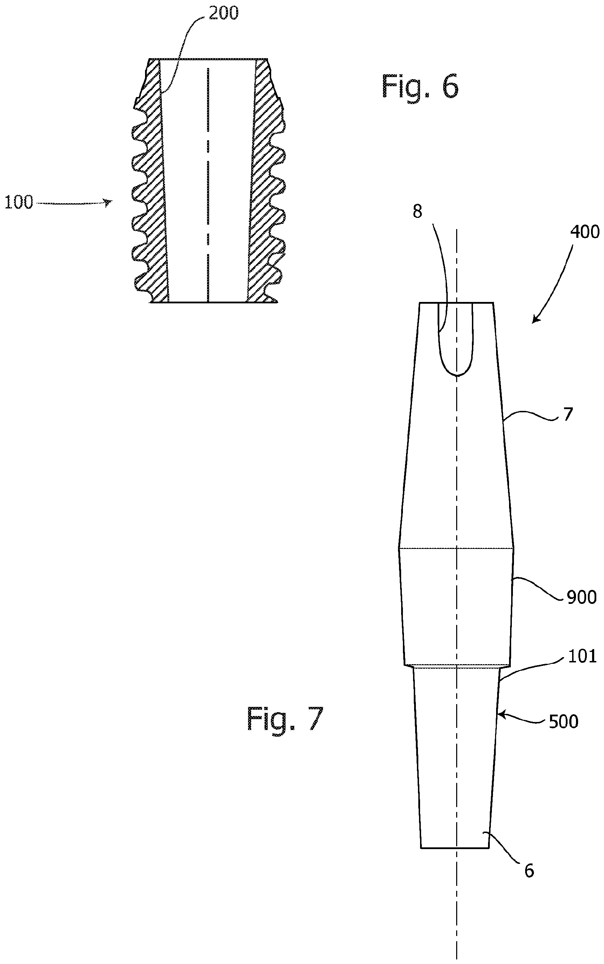

Schematically, the abutment 19 is of the frustoconical type tapered towards both ends. Traditionally, the abutment 19 has an abutment post 20 terminating inferiorly with a non-round end, for example hexagonal prismatic 21, of the same shape and dimensions as the hexagonal prismatic end 6 of the transfer 4. The abutment 19 has an abutment head 22 intended for supporting a dental crown. The abutment head 22 is substantially identical to the transfer head 7. The abutment head 22 is shown as a frustoconical shape tapered on the side opposite to the abutment post 20, but could be different as well as the transfer head 7. As is known, the abutment head 22 has a lightning 8 or the like to indicate the orientation of the abutment 19. Conventionally, the abutment post 20 has a frustoconical surface to be stably retained by the surface of the frustoconical cavity 2 of the implant 1. Reference is made to Figure 5, which is a partially cross-sectioned side view of the abutment 19 in Figure 4 complete with dental crown 13, that is shown by dashed line, and inserted in the implant 1 that is already installed in the patient's mouth. The dental crown 13 is cemented onto the abutment head 22. The insertion of the abutment 19, complete with dental crown 13, in the implant is performed with conventional techniques. The abutment post 20 is perfectly tightly connected to the frustoconical cavity 2 of the implant 1. Reference should now be made to Figures 6 and 7 which show a central longitudinal cross-section of a first implant variant and a schematic side view of a first transfer variant, respectively, according to the present invention. A dental implant 100 is similar to that shown in Figure 1 but, unlike the one, it does not have the not round end space, in its frustoconical cavity 200, which is a longitudinal through hole for the insertion of the abutment complete with a dental crown. In fact, the frustoconical cavity 200 extends over the entire length of the implant. This variant shown in Figure 6 makes easier to fabricate the implant with respect to the implant 1 shown in Figure 1.

Figure 7 shows a first variant of transfer 400, having a transfer post 500 terminating inferiorly with a round end, unlike the transfer 4 in Figure 2. Like that, the transfer 400 has a transfer head 7 intended to support the dental crown, the transfer head 7 having a lightning 8 to indicate the orientation of the transfer 400. Unlike the transfer 4 of Figure 2, the transfer post 500 has a first frustoconical retaining surface portion 900, bordering at the top with the transfer head 7, having substantially double extent with respect to the first frustoconical retaining surface portion 9 in Figure 2, at the expense of the second frustoconical surface portion 101 of lower conicity. The increase in extent depends on the need to create an adequate friction tightness, since the hexagonal prismatic end present in the transfer 4 in Figure 2 is missing.

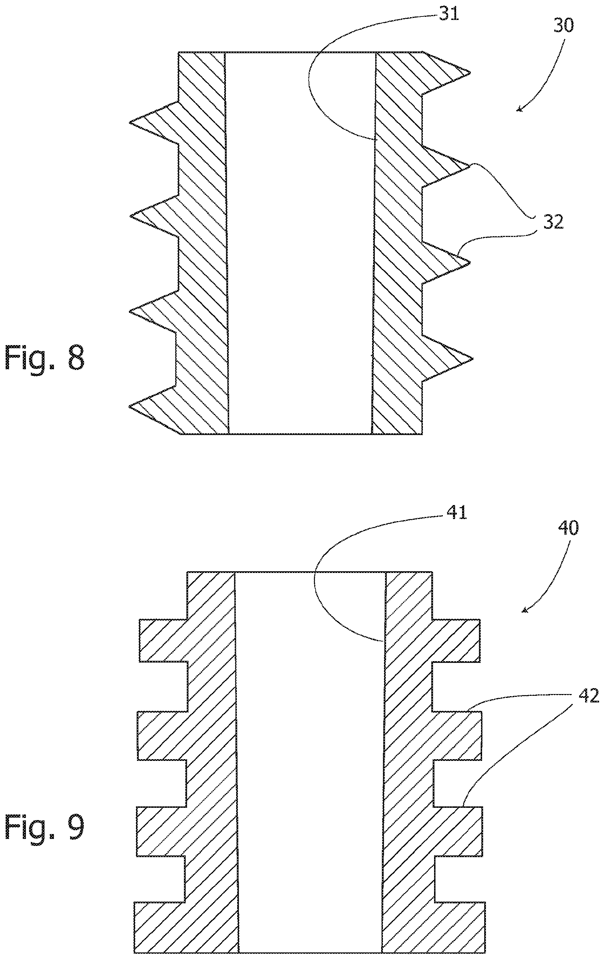

Reference should now be made to Figures 8 and 9 that show in central longitudinal cross-section a second and third variant of dental implant, respectively, according to the present invention. The second variant of dental plant in Figure 8 is of a screw type, and the third variant of dental plant in figure 9 is of a plateau or platform type. Both implants have a conometric or Morse cavity, i.e. with a conicity lower than 4°.

The second variant shown in Figure 8 and indicated with 30 has a conometric cavity 31 and the screw threads, indicated generically with 32, have a triangular cross-section.

The third variant shown in Figure 9 and indicated with 40 has a conometric cavity 41 and the platforms, indicated generically with 42, have a rectangular cross-section.

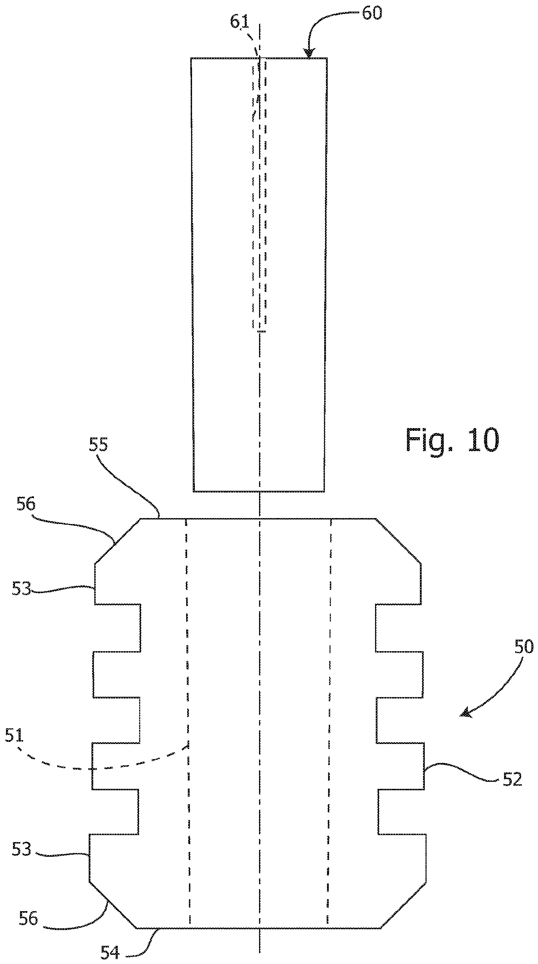

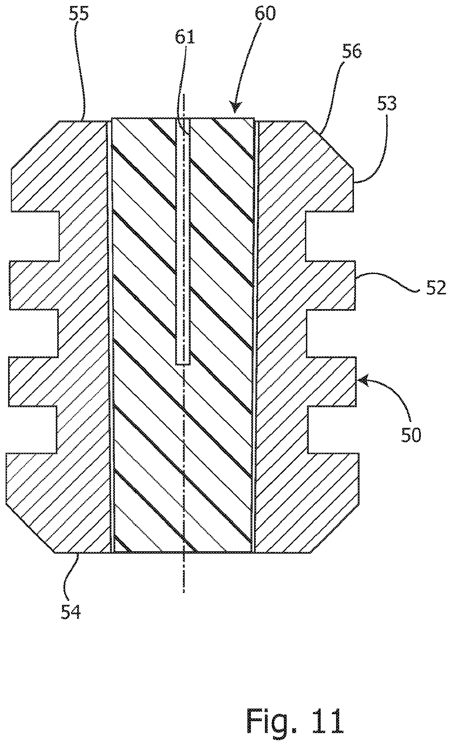

Reference should now be made to Figures 10 and 11 which are a side view and a central longitudinal cross-section, respectively, of a fourth variant 50 of the dental implant according to the present invention and of a frustoconical cap 60 shown exploded with respect to the implant and assembled, respectively. The frustoconical cap 60 can also be inserted into the cavities 200, 31, 41 of the respective implants 100, 30, 40.

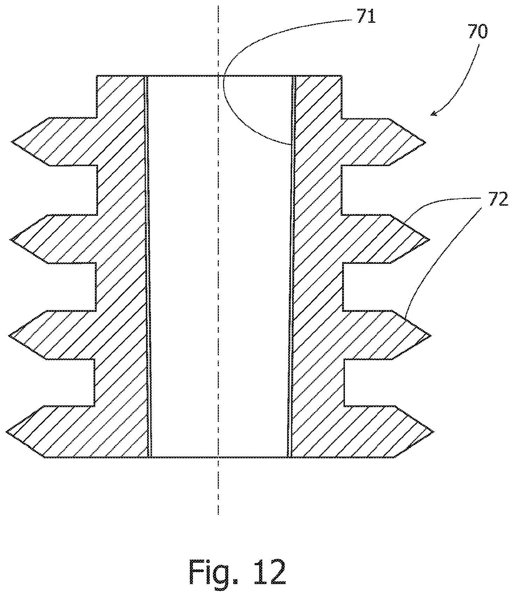

As the third variant 40 shown in Figure 9, the fourth variant indicated as 50 has a conometric cavity 51 and the platforms, indicated generically as 52, have a rectangular cross-section. Furthermore, end platforms generally indicated as 53 are tapered toward implant opposite ends, that are the apical one 54 and the inlet one 55, along inclined tracts indicated generically as 56. A fifth variant, analogously shown in Figure 12 and indicated as 70 has a conometric cavity 71 and the platforms, indicated generically as 72, have a rectangular cross-section terminating with a triangle.

In the four variants of dental implant 30, 40, 50, 70, traditional abutments, such as the one indicated as 19 in Figure 4 but deprived of the hexagonal end 21, can be inserted.

The frustoconical cap 60 also has a taper similar to that of the cavity 51 of the implant 50 and is made of plastic material. It has a blind hole 61 centrally in its top for its grip by means of a suitable tool in the form of a corkscrew or reamer. The cap 60 is useful to keep the implant closed, already installed in the patient's mouth, before the final abutment is inserted so that the cavity 51 of the implant is not occupied by bone that could form and insert itself apically, i.e. from the bottom, inside the implant cavity, or by gingival tissue that could insert itself from the top inside the implant cavity.

It should be understood that the dental implant system according to the present invention achieves the intended objects. Thanks to the fact that the cavity of the dental implant is a through hole, its length can be advantageously reduced. In fact, a conometric contact of only 2,5 mm is enough for giving stability to a connection between abutment and implant. This is particularly useful in cases where a so-called short implant is needed due to the reduced vertical bone size.

Moreover, the dental implant system according to the present invention allows an easy impression taking in the mouth of the patient and its easy removal from it for the construction of the model and the manufacturing of the dental crown. This will be moved by the transfer and, then, fixed on the abutment for the permanent installation of this in the patient's implant.

## Claims

1. A dental implant system, comprising
- a dental implant (1; 100; 30; 40; 50; 70), having an implant frustoconical cavity (2; 200; 31; 41; 51; 71) with a dental implant apical end and an abutment inlet end,
- an abutment (19) having an abutment post (20) of size and shape such as to be permanently retained in the implant frustoconical cavity (2; 200; 31; 41; 51; 71) of the dental implant (1; 100; 30; 40; 50; 70) and an abutment head (22) suitable for supporting a dental crown (13),
- a dental transfer (4; 400) having a transfer post (5; 500) intended to be inserted into the implant frustoconical cavity (2; 200; 31; 41; 51; 71) of the dental implant (1; 100; 30; 40; 50; 70) before an impression taking, and a transfer head (7) identical to the abutment head (22) of the abutment (19),
and
- an implant analog (11) having an analog internal cavity (16) suitable for receiving the transfer post (5; 500) of the dental transfer (4; 400), and an outer surface (14) provided with undercuts (15) so that the implant analog (11) is retained inside a plaster model (12) in casting a dental model into said impression,
the dental implant system being **characterized in that** the dental implant apical end is hollow and communicates with outside of the dental implant (1; 100; 30; 40; 50; 70) and **in that** the implant frustoconical cavity (2; 200; 31; 41; 51; 71) of the dental implant (1; 100; 30; 40; 50; 70) is a through hole, such that the dental implant (1) is open from the dental implant apical end to the abutment inlet end.

2. The dental implant system according to claim 1, wherein the transfer post (5; 500) has:
- a first frustoconical surface portion (9) that borders superiorly with the transfer head (7) and has a taper identical to that of the abutment post (20), and
- a remaining second frustoconical surface portion (10; 101) having a taper lower than that of the first frustoconical surface portion (9), so that the dental transfer (4; 400) is adapted to be retained in the implant frustoconical cavity (2; 200; 31; 41; 51; 71) by friction with the first frustoconical surface portion (9) for impression taking.

3. The dental implant system according to claim 1, wherein
- the dental implant apical end is a prismatic end space (3) communicating with the implant frustoconical cavity (2) and with the outside,
- the abutment post (20) has a prismatic abutment post end (21) intended to be received in the prismatic end space (3),
- the analog internal cavity (16) includes a prismatic analog bottom (18), and
- the transfer post (5) has a prismatic transfer post end (6) intended to be received in the prismatic analog bottom (18).

4. The dental implant system according to claim 3, wherein
- the prismatic end space (3) has hexagonal prismatic shape,
- the prismatic abutment post end (21) is hexagonal prismatic,
- the prismatic analog bottom (18) has hexagonal prismatic shape, and
- the prismatic transfer post end (6) is hexagonal prismatic.

5. The dental implant system according to claim 2, wherein the analog internal cavity (16) has a top portion (17) of a frustoconical shape identical to the corresponding portion of the implant frustoconical cavity (2) so that the first frustoconical surface portion (9; 900) of the dental transfer (4; 400) adheres with the top portion (17) by friction.

6. The dental implant system according to claim 2, wherein the extent of the first frustoconical surface portion (9) of the transfer post (5) with prismatic transfer post end (6) is a quarter of the extent of the second frustoconical surface portion (10) of the transfer post (5).

7. The dental implant system according to claim 2, wherein the extent of the first frustoconical surface portion (900) of the transfer post (500) with round end is a half of the extent of the second frustoconical surface portion (101) of the transfer post (500).

8. The dental implant system according to claim 1, wherein the implant frustoconical cavity (31; 41; 51; 71) has a Morse tapering.

9. The dental implant system according to claim 1, wherein the dental implant (1; 30) is a screw dental implant.

10. The dental implant system according to claim 8, wherein the dental implant (40; 50; 70) is a platform dental implant.

11. The dental implant system according to claim 10, wherein the dental implant (40; 50) have platforms (42; 52) with a rectangular cross-section.

12. The dental implant system according to claim 11, wherein the dental implant (50) has end platforms (53) tapered towards opposite implant ends (54, 55).

13. The dental implant system according to claim 10, wherein the dental implant (70) has platforms (72) with a rectangular cross-section terminating with a triangle.

14. The dental implant system according to claim 1, wherein the implant frustoconical cavity (200; 31; 41; 51; 71) of the dental implants (100; 30; 40; 50; 70) is adapt to be closed by a frustoconical cap (60).

15. The dental implant system according to claim 14, wherein the frustoconical cap (60) is of a plastic material and has on top a blind hole (61) to be removed.

## Patentansprüche

1. Zahnimplantatsystem, umfassend
- ein Zahnimplantat (1; 100; 30; 40; 50; 70), aufweisend einen kegelstumpfförmigen Implantathohlraum (2; 200; 31; 41; 51; 71) mit einem apikalen Implantatende und einem Abutment-Einlassende;
- ein Abutment (19), aufweisend einen Abutment-Pfosten (20), dessen Größe und Form so beschaffen sind, dass dieser dauerhaft im kegelstumpfförmigen Implantathohlraum (2; 200; 31; 41; 51; 71) des Zahnimplantats (1; 100; 30; 40; 50; 70) gehalten wird, und einen Abutment-Kopf (22), der geeignet ist, um eine Zahnkrone (13) zu tragen;
- ein Zahnübertragungshilfsteil (4; 400), aufweisend einen Übertragungspfosten (5; 500), der dazu bestimmt ist, in den kegelstumpfförmigen Implantathohlraum (2; 200; 31; 41; 51; 71) des Zahnimplantats (1; 100; 30; 40; 50; 70) eingesetzt zu werden, bevor ein Abdruck genommen wird, und einen Übertragungskopf (7), der mit dem Abutment-Kopf (22) des Abutments (19) identisch ist, und
- ein Implantatgegenstück (11), das einen internen Gegenstückshohlraum (16) aufweist, der geeignet ist, um die Übertragungspfosten (5; 500) des Zahnübertragungshilfsteils (4; 400) aufzunehmen, und eine äußere Oberfläche (14), die mit Hinterschneidungen (15) versehen ist, sodass das Implantatgegenstück (11) beim Gießen eines Zahnmodells in den Abdruck in einem Abdruckmassenmodell (12) gehalten wird,
wobei das Zahnimplantatsystem **dadurch gekennzeichnet ist, dass** das apikale Ende des Zahnimplantats hohl ist und mit der Außenseite des Zahnimplantats (1; 100; 30; 40; 50; 70) kommuniziert, und dadurch, dass der kegelstumpfförmige Implantathohlraum (2; 200; 31; 41; 51; 71) des Zahnimplantats (1; 100; 30; 40; 50; 70) ein Durchführungsloch ist, sodass das Zahnimplantat (1) vom apikalen Zahnimplantatende zum Abutment-Einlassende offen ist.

2. Zahnimplantatsystem nach Anspruch 1, wobei der Übertragungspfosten (5; 500) Folgendes aufweist:
- einen ersten kegelstumpfförmigen Oberflächenabschnitt (9), der den Übertragungskopf (7) oberseitig einfasst und eine Abschrägung aufweist, die mit der des Abutment-Pfostens (20) identisch ist, und
- einen verbleibenden zweiten kegelstumpfförmigen Oberflächenabschnitt (10; 101), der eine Abschrägung aufweist, die niedriger als die des ersten kegelstumpfförmigen Oberflächenabschnitts (9) ist,
sodass das Zahnübertragungshilfsteil (4; 400) ausgelegt ist, um im kegelstumpfförmigen Implantathohlraum (2; 200; 31; 41; 51; 71) durch Reibung mit dem ersten kegelstumpfförmigen Abschnitt (9) zum Nehmen des Abdrucks gehalten zu werden.

3. Zahnimplantatsystem nach Anspruch 1, wobei
- das apikale Ende des Zahnimplantats ein prismatischer Endraum (3) ist, der mit dem kegelstumpfförmigen Implantathohlraum (2) und mit der Außenseite kommuniziert;
- der Abutment-Pfosten (20) ein prismatisches Abutment-Pfostenende (21) aufweist, das dazu bestimmt ist, im prismatischen Endraum (3) aufgenommen zu werden;
- der interne Gegenstückshohlraum (16) einen prismatischen Gegenstücksboden (18) einschließt und
- der Übertragungspfosten (5) ein prismatisches Übertragungspfostenende (6) aufweist, das dazu bestimmt ist, im prismatischen Gegenstücksboden (18) aufgenommen zu werden.

4. Zahnimplantatsystem nach Anspruch 3, wobei
- der prismatische Endraum (3) eine prismatische Sechskantform aufweist;
- das prismatische Abutment-Pfostenende (21) sechseckig prismatisch ist;
- der prismatische Gegenstücksboden (18) eine prismatische Sechskantform aufweist und
- das prismatische Übertragungspfostenende (6) sechseckig prismatisch ist.

5. Zahnimplantatsystem nach Anspruch 2, wobei der interne Gegenstückshohlraum (16) einen oberseitigen Abschnitt (17) einer Kegelstumpfform aufweist, der mit dem entsprechenden Abschnitt des kegelstumpfförmigen Implantathohlraums (2) identisch ist, sodass der erste kegelstumpfförmige Oberflächenabschnitt (9; 900) des Zahnübertragungshilfsteils (4; 400) durch Reibung am oberseitigen Abschnitt (17) haftet.

6. Zahnimplantatsystem nach Anspruch 2, wobei die Ausdehnung des ersten kegelstumpfförmigen Oberflächenabschnitts (9) des Übertragungspfostens (5) mit dem prismatischen Übertragungspfostenende (6) ein Viertel der Ausdehnung des zweiten kegelstumpfförmigen Oberflächenabschnitts (10) des Übertragungspfostens (5) beträgt.

7. Zahnimplantatsystem nach Anspruch 2, wobei die Ausdehnung des ersten kegelstumpfförmigen Oberflächenabschnitts (900) des Übertragungspfostens (500) mit rundem Ende eine Hälfte der Ausdehnung des zweiten kegelstumpfförmigen Oberflächenabschnitts (101) des Übertragungspfostens (500) beträgt.

8. Zahnimplantatsystem nach Anspruch 1, wobei der kegelstumpfförmige Implantathohlraum (31; 41; 51; 71) einen Morsekegel aufweist.

9. Zahnimplantatsystem nach Anspruch 1, wobei das Zahnimplantat (1; 30) ein Schraubenzahnimplantat ist.

10. Zahnimplantatsystem nach Anspruch 8, wobei das Zahnimplantat (40; 50; 70) ein Plattformzahnimplantat ist.

11. Zahnimplantatsystem nach Anspruch 10, wobei das Zahnimplantat (40; 50) Plattformen (42; 52) mit rechteckigem Querschnitt aufweist.

12. Zahnimplantatsystem nach Anspruch 11, wobei das Zahnimplantat (50) Endplattformen (53) aufweist, die hinführend zu gegenständigen Implantatenden (54, 55) verjüngt sind.

13. Zahnimplantatsystem nach Anspruch 10, wobei das Zahnimplantat (70) Plattformen (72) mit rechteckigem Querschnitt, endend mit einem Dreieck, aufweist.

14. Zahnimplantatsystem nach Anspruch 1, wobei der kegelstumpfförmige Implantathohlraum (200; 31; 41; 51; 71) der Zahnimplantate (100; 30; 40; 50; 70) ausgelegt ist, um durch eine kegelstumpfförmige Kappe (60) verschlossen zu werden.

15. Zahnimplantatsystem nach Anspruch 14, wobei die kegelstumpfförmige Kappe (60) aus einem Kunststoffmaterial besteht und auf der Oberseite ein zu entfernendes Blindloch (61) aufweist.

## Revendications

1. Système d'implant dentaire, comprenant :
- un implant dentaire (1 ; 100 ; 30 ; 40 ; 50 ; 70), ayant une cavité tronconique d'implant (2 ; 200 ; 31 ; 41 ; 51 ; 71) avec une extrémité apicale d'implant dentaire et une extrémité d'entrée de pilier,
- un pilier (19), comportant un tenon de pilier (20) dont la taille et la forme permettent de le maintenir en permanence dans la cavité tronconique (2 ; 200 ; 31 ; 41 ; 51 ; 71) de l'implant dentaire (1 ; 100 ; 30 ; 40 ; 50 ; 70) et une tête de pilier (22) adaptée au support d'une couronne dentaire (13),
- un transfert dentaire (4 ; 400), comportant un tenon de transfert (5 ; 500) destiné à être inséré dans la cavité tronconique (2 ; 200 ; 31 ; 41 ; 51 ; 71) de l'implant dentaire (1 ; 100 ; 30 ; 40 ; 50 ; 70) avant une prise d'empreinte, et une tête de transfert (7) identique à la tête de pilier (22) du pilier (19), et
- un analogue d'implant (11) présentant une cavité interne analogue (16) apte à recevoir le tenon de transfert (5 ; 500) du transfert dentaire (4 ; 400), et une surface extérieure (14) pourvue de contre-dépouilles (15) afin que l'analogue d'implant (11) soit retenu à l'intérieur d'un modèle en plâtre (12) lors de la coulée d'un modèle dentaire dans ladite empreinte,
le système d'implant dentaire étant **caractérisé en ce que** l'extrémité apicale de l'implant dentaire est creuse et communique avec l'extérieur de l'implant dentaire (1 ; 100 ; 30 ; 40 ; 50 ; 70) et par le fait que la cavité tronconique de l'implant (2 ; 200 ; 31 ; 41 ; 51 ; 71) de l'implant dentaire (1 ; 100 ; 30 ; 40 ; 50 ; 70) est un trou traversant, de sorte que l'implant dentaire (1) est ouvert depuis l'extrémité apicale de l'implant dentaire jusqu'à l'extrémité d'entrée du pilier.

2. Système d'implant dentaire selon la revendication 1, dans lequel le tenon de transfert (5 ; 500) a :
- une première partie de surface tronconique (9) qui borde supérieurement la tête de transfert (7) et présente une conicité identique à celle du tenon de pilier (20), et
- une deuxième partie restante de la surface tronconique (10 ; 101) ayant une conicité inférieure à celle de la première partie de la surface tronconique (9), de sorte que le transfert dentaire (4 ; 400) est adapté pour être retenu dans la cavité tronconique de l'implant (2 ; 200 ; 31 ; 41 ; 51 ; 71) par friction avec la première partie de surface tronconique (9) pour la prise d'empreinte.

3. Système d'implant dentaire selon la revendication 1, dans lequel
- l'extrémité apicale de l'implant dentaire est un espace d'extrémité prismatique (3) communiquant avec la cavité tronconique de l'implant (2) et avec l'extérieur,
- le tenon de pilier (20) a une extrémité de tenon de pilier prismatique (21) destinée à être reçue dans l'espace d'extrémité prismatique (3),
- la cavité interne analogue (16) inclut un fond analogue prismatique (18), et
- le tenon de transfert (5) a une extrémité de tenon de transfert prismatique (6) destinée à être reçue dans le fond analogue prismatique (18).

4. Système d'implant dentaire selon la revendication 3, dans lequel
- l'espace d'extrémité prismatique (3) a une forme prismatique hexagonale,
- l'extrémité prismatique du tenon de pilier (21) est prismatique hexagonale,
- le fond analogue prismatique (18) a une forme prismatique hexagonale, et
- l'extrémité prismatique du tenon de transfert (6) est prismatique hexagonale.

5. Système d'implant dentaire selon la revendication 2, dans lequel la cavité interne analogue (16) présente une partie supérieure (17) de forme tronconique identique à la partie correspondante de la cavité tronconique de l'implant (2), de sorte que la première partie de surface tronconique (9 ; 900) du transfert dentaire (4 ; 400) adhère à la partie supérieure (17) par friction.

6. Système d'implant dentaire selon la revendication 2, dans lequel l'étendue de la première partie de surface tronconique (9) du tenon de transfert (5) avec l'extrémité prismatique du tenon de transfert (6) est un quart de l'étendue de la deuxième partie de surface tronconique (10) du tenon de transfert (5).

7. Système d'implant dentaire selon la revendication 2, dans lequel l'étendue de la première partie de surface tronconique (900) du tenon de transfert (500) à extrémité ronde est la moitié de l'étendue de la deuxième partie de surface tronconique (101) du tenon de transfert (500).

8. Système d'implant dentaire selon la revendication 1, dans lequel la cavité tronconique de l'implant (31 ; 41 ; 51 ; 71) présente une conicité Morse.

9. Système d'implant dentaire selon la revendication 1, dans lequel l'implant dentaire (1 ; 30) est un implant dentaire à vis.

10. Système d'implant dentaire selon la revendication 8, dans lequel l'implant dentaire (40 ; 50 ; 70) est un implant dentaire à plate-forme.

11. Système d'implant dentaire selon la revendication 10, dans lequel les implants dentaires (40 ; 50) ont des plates-formes (42 ; 52) avec une section transversale rectangulaire.

12. Système d'implant dentaire selon la revendication 11, dans lequel l'implant dentaire (50) a des plates-formes d'extrémité (53) effilées vers des extrémités opposées de l'implant (54, 55).

13. Système d'implant dentaire selon la revendication 10, dans lequel l'implant dentaire (70) a des plates-formes (72) à section rectangulaire se terminant par un triangle.

14. Système d'implant dentaire selon la revendication 1, dans lequel la cavité tronconique (200 ; 31 ; 41 ; 51 ; 71) des implants dentaires (100 ; 30 ; 40 ; 50 ; 70) est adaptée pour être fermée par un capuchon tronconique (60).

15. Système d'implant dentaire selon la revendication 14, dans lequel le capuchon tronconique (60) est en matière plastique et comporte un trou borgne (61) à éliminer.
